(19) Europäisches Patentamt

European Patent Office

Office européen des brevets

(11) **EP 0 913 315 A2**

## (12) EUROPEAN PATENT APPLICATION

(43) Date of publication:
06.05.1999 Bulletin 1999/18

(51) Int. Cl.$^6$: **B62D 5/06**

(21) Application number: 98203249.2

(22) Date of filing: 28.09.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 31.10.1997 US 962196

(71) Applicant:
**GENERAL MOTORS CORPORATION**
**Detroit Michigan 48202 (US)**

(72) Inventors:
• **Collier-Hallman, Steven James**
**Frankenmuth, Michigan 48734 (US)**
• **Klass, Jeffrey Thomas**
**Kawkawlin, Michigan 48631 (US)**

(74) Representative:
**Denton, Michael John**
**Delphi Automotive Systems**
**Centre Technique Paris**
**117 avenue des Nations**
**B.P. 60059**
**95972 Roissy Charles de Gaulle Cedex (FR)**

(54) **Self-calibrating electro-hydraulic power steering system**

(57) A vehicle power steering system (5) derives a command speed signal from an input load signal, with the command speed signal being switched in a switching region of the input load signal between a low standby value and a high nominal value. The system is responsive to sensor apparatus (44) for providing a power steering load signal and filters (600) this power steering load signal to estimate the internal losses of the system. The filtered signal is used to compensate (610) the power steering load signal for these internal losses; and the compensated power steering load signal is provided as the input load signal from which the command speed signal is derived, with the derivation thus compensated and stabilized in the switching region. Preferably, the power steering load signal is a motor current signal from the motor (12) which drives the pump (14); and the filtering is performed by a low pass filter with a short finite time constant for decreasing input allowing tracking of the input to record its minimum value and a long finite time constant for increasing input to approximately hold the recorded minimum value as an estimate of internal system losses during an extended steering maneuver. The filter output may also be held constant when the power steering load signal exceeds a high reference value, varied inversely with the temperature of the power steering fluid, to maintain the loss estimate during a longer, extended period of high internal system losses, such as warm up in very cold weather. The power steering load signal may also be specifically compensated (132,134) in response to power steering fluid temperature and/or motor speed.

Fig.1.

## Description

### TECHNICAL FIELD

The technical field of the invention is vehicle power steering systems, and particularly such systems in which fluid power is provided by an electric motor driven pump.

### BACKGROUND OF THE INVENTION

In a vehicle power steering system, a pump provides power steering fluid at an elevated pressure for power assist to the vehicle operator in turning a handwheel to steer the vehicle. Most such systems use the vehicle engine itself, through a pulley and belt arrangement, to drive the pump. However, it is also known to use an electric motor to drive the pump independently of the vehicle engine in an electro-hydraulic power steering system; and this allows the pump to be driven at a lower standby speed for significant energy savings when the requirement for power assist is low, such as when the vehicle is proceeding in a straight line or is standing still.

A basic arrangement for an electro-hydraulic power steering system is described in European Patent Application 0053297 A1, published June 9, 1982. The publication describes a pump 4 driven by an electric motor 6, with operating current provided from a battery 11 under control of a power regulator 12. Demand for power assist is indicated by a counter-pressure of the power steering fluid, which increases motor load and thus motor current. A controller 8 varies electric power to motor 6 in response to a motor current sensor 7 as required to meet the demand. The motor current is used as a signal indicative of power steering load; and hydraulic power steering fluid pressure is recognized as another such signal which could alternatively be used.

However, the basic premise of this system - that the power steering load is represented by the electric current in the pump driving motor or the hydraulic power steering fluid pressure - is only approximately true. A portion of the motor's power is used to overcome energy losses in the pump/motor assembly and the fluid conduits of the power steering system. These losses include eddy current and hysteresis losses in the motor, viscous and Coulomb friction in the motor and pump, and viscous losses in the hoses, control valve and gear; and they vary significantly with the temperature of the power steering fluid and the electric motor, which is preferably submerged with the pump in the power steering reservoir. Some of these losses also vary with the rotational speed of the motor or with age and wear of system mechanical components. In the case of hydraulic pressure, the offset of the pressure sensor presents another such loss. Over a large range of pump pressure, such inaccuracy presents little problem, particularly if the controller provides closed loop control of motor speed. However, in a switching region at the low end of the full range of power steering system load, where the motor and pump are switched between a low speed standby mode for energy savings when no power assist is required and the significantly higher motor speed required for power assist, greater accuracy is required.

In the switching region, the value or values (if hysteresis is provided) at which motor speed is switched between the low standby pressure and the high nominal pressure is calibrated to provide the low standby value of motor speed for power saving in response to low values of the input load signal indicating low required power assist and to provide the high nominal value of motor speed in response to higher values of the input load signal indicating high required power assist so as to avoid "pump catch," in which the pump does not provide sufficient flow soon enough to meet a quickly increasing demand from the power steering system. The design of the power steering system is a compromise which provides one or more carefully chosen, specific switch points to achieve the best combination of benefits for a particular vehicle. This combination of benefits will not be achieved, however, without significant accuracy in the operation of the system in the switching region.

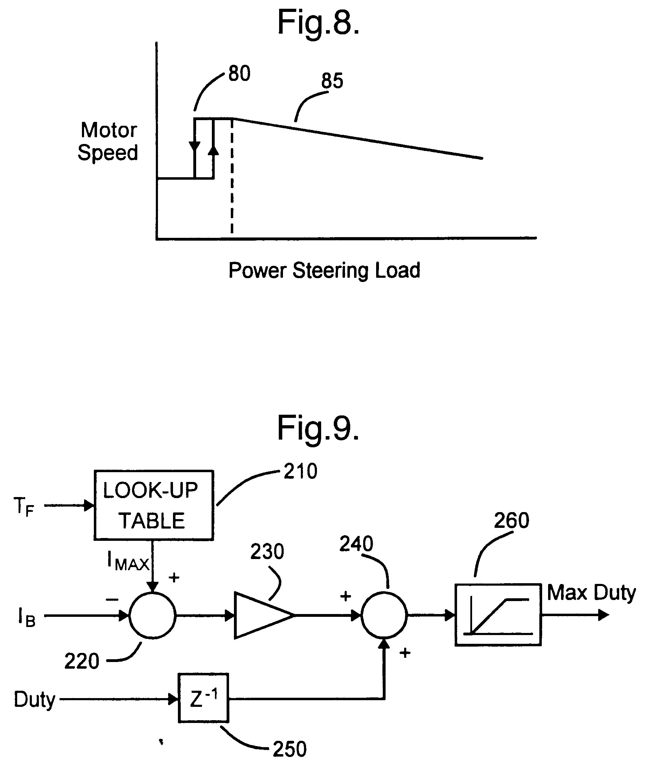

A typical plot of commanded motor speed as a function of sensed power steering load (as indicated by motor current), is shown in FIG. 8. The temperature, motor speed, wear and other variables in the power steering load signal produce a shift in the actual power steering load relative to the predetermined switch point or points along the power steering load (horizontal) axis, due to the varying value of the losses which make up part of the sensed load. For example, if the load signal is inflated by large internal losses due to increased viscous friction at cold temperatures and/or increased Coulomb friction due to age and wear, the power steering load signal will have to go lower, in comparison, to trigger the switch into standby; and the system will thus spend less time in standby for a decrease in energy savings. In extreme cases, the shift might be sufficient that the system would not enter standby at all. Thus, some method of compensating for the internal losses of the system is desirable to maximize the energy saving benefits of the system.

### SUMMARY OF THE INVENTION

The vehicle power steering system of this invention derives a command speed signal from an input load signal, with the command speed signal being switched in a switching region of the input load signal between a low standby value and a high nominal value. The switching region is calibrated to provide the low standby value of motor speed for power saving in response to low values of the input load signal indicating low required power assist and to provide the high nominal value of motor speed in response to higher values of the input load signal indicating high required power assist.

The vehicle power steering system of this invention is responsive to sensor apparatus for providing a power steering load signal and filters this power steering load signal to estimate the internal losses of the system. The filtered signal is used to compensate the power steering load signal for these internal losses; and the compensated power steering load signal is provided as the input load signal from which the command speed signal is derived, with the derivation thus compensated and stabilized in the switching region.

Preferably, the power steering load signal is a motor current signal from the motor which drives the pump; and the filtering is performed by a low pass filter having a first finite time constant for increasing input and a second finite time constant, shorter than the first finite time constant, for decreasing input. Preferably, the first finite time constant is as long as an extended steering maneuver and the second finite time constant is sufficiently short to track the decreasing value of the power steering load signal but long enough to suppress noise therein. Thus, each time that the demand for power assist decreases to its lowest value, the filtered signal tends to track the decreasing power steering load signal and thus record the minimum value, which represents the energy losses of the system. The long time constant for increasing power steering load signal provides a tendency to retain this minimum value, as a loss estimate, for compensation during an extended steering maneuver when power assist is once again demanded. Preferably, the compensated value may be held constant when the power steering load signal exceeds a high reference value, varied inversely with the temperature of the power steering fluid, to maintain the loss estimate during a period of very high power steering load, such as when the hand-wheel is turned all the way to the limit stop.

Although other methods of compensation, based on temperature, motor speed and other sensed parameters, are available, each is limited in its effects, since the internal losses of the system vary to different degrees in response to each. The apparatus of this invention, which responds mainly to the dynamic performance of the system itself, automatically compensates for any and all such internal losses, whether recognized or not and regardless of the specifics of their variation. Thus, the apparatus of this invention may be used by itself to compensate for all internal losses of the system or together with additional apparatus compensating for one or more specific, dominant variations.

BRIEF DESCRIPTION OF THE DRAWINGS

FIG. 1 is an overall block diagram of a vehicle electro-hydraulic power steering (EHPS) system.

FIG. 2 is a block diagram of an electric power and control system for an electric motor used to drive a power steering pump in the system of FIG. 1.

FIG. 3 is a functional block diagram of the EHPS control shown in FIG. 2.

FIG. 4 shows further details of the SPEED COMMAND block in the EHPS control of FIG. 3.

FIG. 5 shows further details of the STANDBY SPEED COMMAND block in the diagram of FIG. 4.

FIG. 6 shows further details of the NON-LINEAR LOW PASS FILTER blocks in the diagram of FIG. 5.

FIG. 7 shows further details of the NOMINAL SPEED COMMAND block in the diagram of FIG. 4.

FIG. 8 shows a plot of commanded motor speed as a function of input load for the SPEED COMMAND block of FIG. 4-7.

FIG. 9 shows further details of the INPUT CURRENT LIMIT block in the EHPS control of FIG. 3.

FIG. 10 shows further details of the SELF-CALIBRATION block in the diagram of FIG. 5.

FIG. 11 shows further details of the ENABLE LOGIC block shown in FIG. 10.

FIG. 12 shows further details of the LOSS ESTIMATOR block shown in FIG. 10.

FIG. 13-14 show computer flow charts derived from and equivalent to the EHPS control of FIG. 3.

FIG. 15 is a table for use in the LOSS ESTIMATOR block of FIG. 10 and 12.

FIG. 16 shows further details of the SPEED CONTROL block in the EHPS control of FIG. 3.

DESCRIPTION OF THE PREFERRED EMBODIMENT

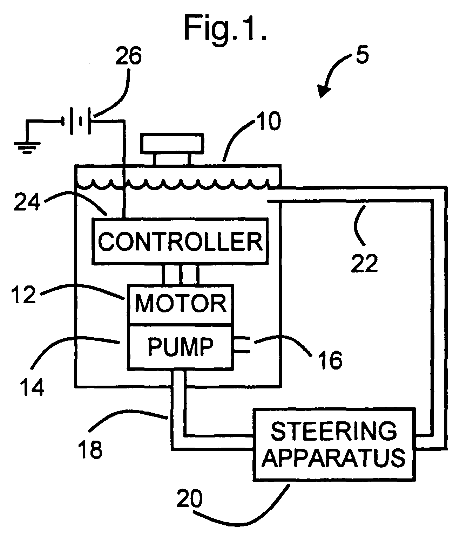

FIG. 1 is a block diagram of an electro-hydraulic power steering (EHPS) system 5 in a motor vehicle. A housing 10 comprises a reservoir for power steering fluid as well as a container for system components. Within housing 10, an electric motor 12 drives a power steering fluid pump 14, the latter having an intake 16 and being effective to provide power steering fluid under pressure through a pump outlet conduit 18 to a power steering apparatus 20 having conventional means, such as that shown in U.S. Patent No. 3,022,772 to Ziegler, issued Feb. 27, 1962 or U.S. Patent No. 4,454,801 to Spann, issued Jun. 19, 1984, for example, to use the pressure of the power steering fluid to provide a power steering assist. A return conduit 22 returns power steering fluid from steering apparatus 20 to housing 10. A controller 24 is located within housing 10 and is generally submerged in the power steering fluid therein along with motor 12 and pump 14. A conventional vehicle DC power source, symbolized by battery 26, provides electric power to controller 24 to generate operating voltage and current for motor 12.

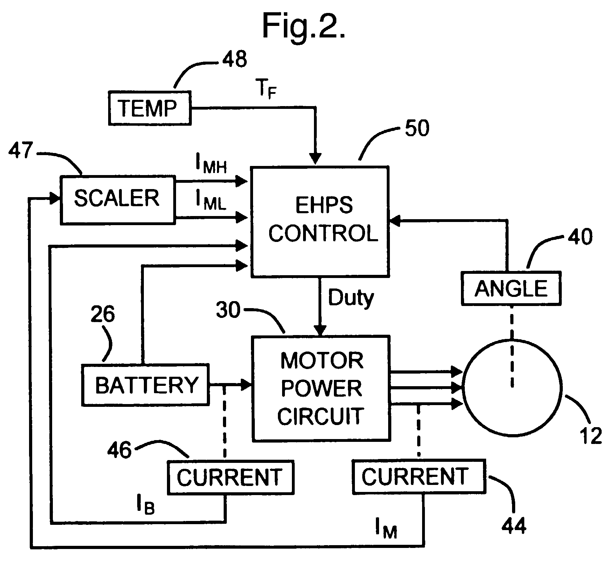

FIG. 2 shows a block diagram of controller 24, together with battery 26 and motor 12. A motor power circuit 30 receives the electric power from DC electric power source 26 and provides current to motor 12, which is preferably a three-phase, brushless DC motor. EHPS control 50 provides a control signal Duty to motor power circuit 30 in response to input signals from a motor angle (position) sensor 40 ($\theta_M$), a motor current sensor apparatus 44 ($I_M$) and a battery current sensor 46 ($I_B$), as well as operating voltage from DC electric power source 26. EHPS control 50 further receives a power steering fluid temperature signal $T_F$ from a temperature sensor 48, which can be located on a submerged part of controller 24.

In the electro-hydraulic power steering system of this apparatus, the power steering fluid pressure in pump outlet conduit 18 is proportional to the torque output of the electric motor, which is proportional to the motor current. It is therefore convenient and less costly to sense motor current, modified by power steering fluid temperature and motor speed, rather than pressure, as a power steering load signal. However, the signal indicating motor current must have a high resolution at low values as well as an extended range of low to high values to cover the full range of operational control. Controller 24 is provided with a digital computer and signal input apparatus including an A/D converter. If the A/D converter has sufficient resolution to handle the high resolution at a low value while encompassing the full range of low to high values, the motor current signal $I_M$ can be converted therein and used as a single signal. However, significant cost can be saved by using an A/D converter with lower resolution; and in this preferred embodiment, the motor current signal $I_M$ is scaled by SCALER 48 into both high gain ($I_{MH}$) and low gain ($I_{ML}$) signals, with the high gain signal $I_{MH}$ used for high resolution at the low values and the low gain signal $I_{ML}$ used when the full range of values is required.

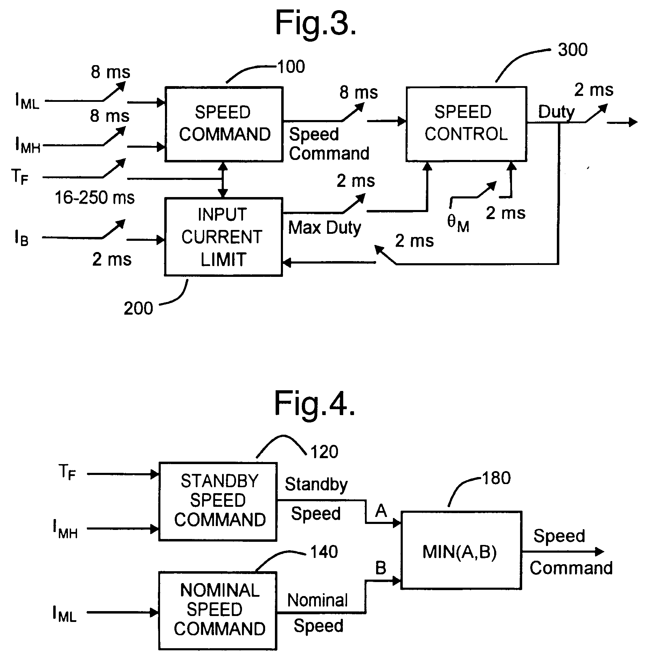

FIG. 3 is a functional block diagram of EHPS Control 50. The diagram shows three functional blocks: SPEED COMMAND 100, INPUT CURRENT LIMIT 200, and SPEED CONTROL 300, with input and output connections, inter-connections and indicated sample times for each connection. SPEED COMMAND 100 determines a desired motor speed from the two input current signals - $I_{MH}$ and $I_{ML}$ - sampled with a period of 8 ms and Temperature $T_F$ sampled with a period of 16 to 250 ms. The desired motor speed is output as a signal Speed Command.

INPUT CURRENT LIMIT 200 determines a voltage signal corresponding to a maximum input current based on temperature, to limit the drain on the electric power supply. It is provided with inputs of battery current $I_B$ at a sample period of 2 ms, Temperature $T_F$ at a sample period of 16 to 250 ms and the controller output signal Duty with a sample period of 2 ms. Its own output signal Max Duty specifies a duty cycle producing the maximum allowable input current.

SPEED CONTROL 300 uses proportional plus integral control to determine the commanded motor duty cycle from the desired motor speed and maximum input current. It receives the output signal Speed Command from SPEED COMMAND 100, with a sample period of 8 ms and the output signal Max Duty from INPUT CURRENT LIMIT 200 with a sample period of 2 ms. The block's output signal Duty is limited by the signal MAX DUTY and is provided as the output of EHPS control 50 and in feedback to INPUT CURRENT LIMIT 200 with sample periods of 2 ms.

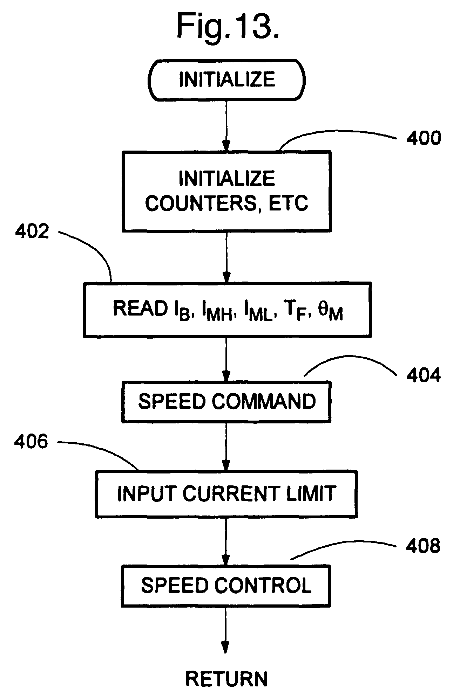

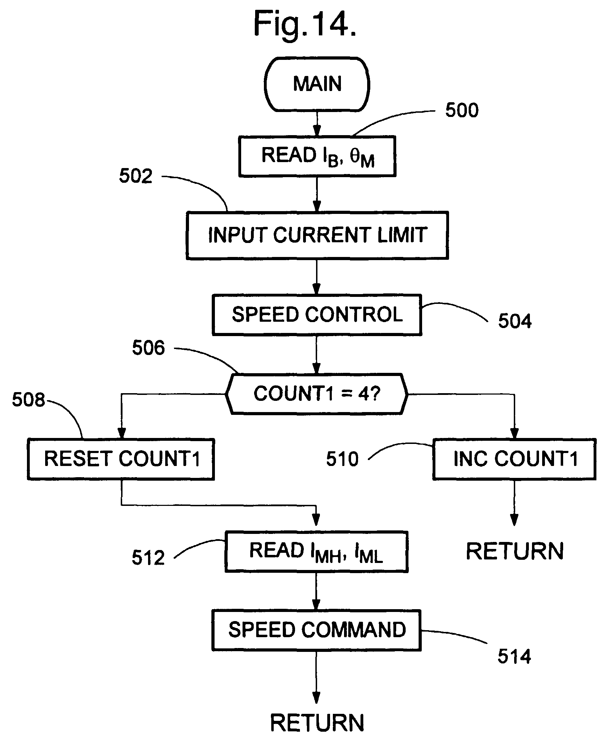

An equivalent representation of FIG. 3, in standard computer flow chart form, is seen in FIG. 13 and 14, for use in a preferred digital computer embodiment. A routine INITIALIZE (FIG. 13) is run once; and a routine MAIN (FIG. 14) is then run repeatedly every 2 milliseconds. Routine INITIALIZE begins in step 400 by initializing all counters, etc. In step 402, the routine reads all inputs. In steps 404-408, the routine performs subroutines SPEED COMMAND, INPUT CURRENT LIMIT, and SPEED CONTROL, respectively, which subroutines correspond to the similarly named functional blocks of FIG. 3, in order to obtain an initial value of Duty. Each functional block which is a sub-unit of one of those listed in the preceding sentence comprises another subroutine organized in a hierarchy as described herein.

Routine MAIN begins in step 500 by reading the inputs which are to be sampled every 2 milliseconds: $I_B$ and $\theta_M$. Next, in steps 502 and 504, the routine calls subroutines INPUT CURRENT LIMIT and SPEED CONTROL, respectively, to provide new values of outputs Max Duty and Duty every 2 milliseconds. Finally, in steps 506-510, the routine manages a counter COUNT1 which provides for inputs $I_{MH}$ and $I_{ML}$ to be read in step 512 and subroutine SPEED COMMAND to be run in step 514 once every four times routine MAIN is run: that is, every 8 milliseconds. Provision may preferably be made for an interrupt routine to read input $T_F$ every 16-250 milliseconds.

SPEED COMMAND 100 is shown in more detail in FIG. 4. This functional block derives a standby speed and a nominal speed, each according to a different algorithm, and chooses the lower of the two as the output signal Speed Command. Thus, the input temperature signal $T_F$ and current signal $I_{MH}$ are provided to a functional block STANDBY SPEED COMMAND 120, in which an output signal Standby Speed is derived; and current signal $I_{ML}$ is provided to a functional block NOMINAL SPEED COMMAND 140, in which an output signal Nominal Speed is derived. These output signals are provided as inputs A and B to a functional block MIN(A,B) 180 to derive the output signal Speed Command. Functional block MIN(A,B) 180 chooses the minimum value of the signals Standby Speed and Nominal Speed and thus provides an output signal Speed Command according to an overall curve such as that shown in FIG. 8, wherein STANDBY SPEED COMMAND 120 controls switching between a low standby speed and a higher nominal speed in a switching region 80 including the lowest values of motor current and NOMINAL SPEED COMMAND 140 controls across the wide nominal range 85 of motor current. Motor current may be limited by standard circuitry in motor power circuit 30.

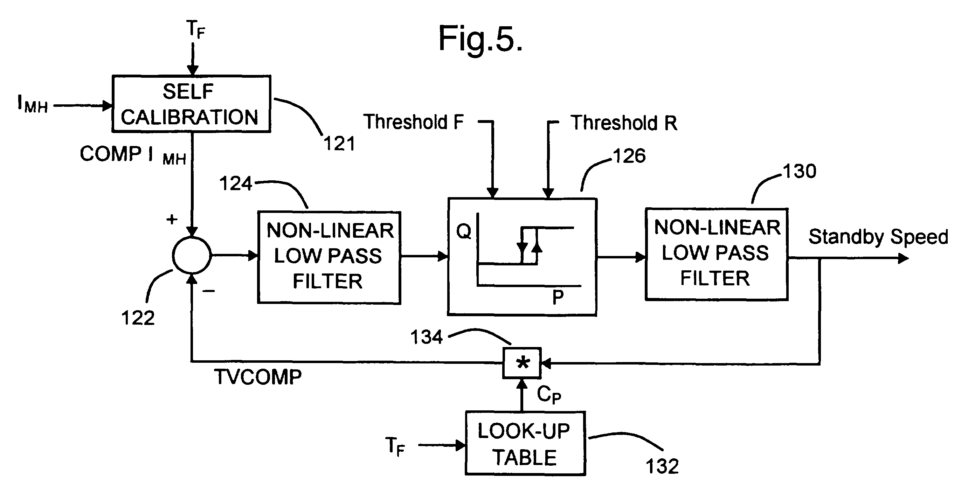

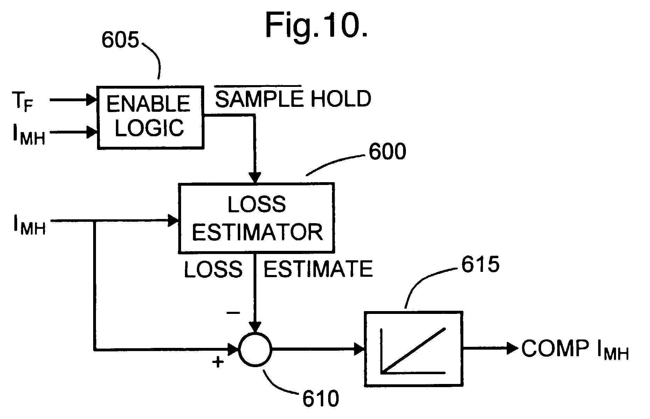

STANDBY SPEED COMMAND 120 is described in more detail in FIG. 5. Since this functional block deals with the low end of the pressure scale, and thus with low values of motor current, the high gain signal $I_{MH}$ is used for motor current. Signals $I_{MH}$ and $T_F$ are provided to SELF-CALIBRATION block 121, which outputs a compensated motor current signal COMP $I_{MH}$. The operation of SELF-CALIBRATION block 121 will be described in more detail below with reference to FIG. 10. The compensated motor current signal COMP $I_{MH}$ is provided to a summing block 122 in which another compensation value TVCOMP, described below, is subtracted. This other compensation value is derived from the sensed parameters of power steering fluid temperature and motor speed and is supplemental to the self-calibration of this invention.

The output of summing block 122, which is an estimate of power steering load derived from motor current and compensated for internal system losses, is provided to a non-linear low pass filter 124, the output of which is provided as one input to a function generator 126. The purpose of non-linear low pass filter 124 is to provide different time constants for increasing and decreasing values of the power steering fluid pressure. A fast time constant is provided for increasing motor current, so as to provide quick switching out of standby, although it is limited to prevent such switching on noise. A slower time constant is provided for decreasing motor current in order to prevent switching back into standby after an initial high demand spike of a quick hand-wheel movement, although it is fast enough to prevent light steering feel after the end of the movement. The filter itself will be described below.

Function generator 126 provides an output Q as a step function of the input P, with hysteresis determined by a predetermined value Threshold F for decreasing values of input P and a predetermined value Threshold R for increasing values of input P. Function generator 126 controls the switching of electric motor 12 between standby and high speed modes of operation. The values of Threshold R and Threshold F are calibrated for a particular vehicle system to provide the maximum energy saving through standby operation when minimal power assist is required while switching out of standby to a high nominal speed quickly enough to avoid pump catch when high power assist is initiated. With the self-calibration of this invention, there is no need to compensate the values of Threshold R and Threshold F directly.

The output Q of function generator 126 is provided to another non-linear low pass filter 130, the output of which is signal Standby Speed. This non-linear low pass filter provides different time constants for increasing and decreasing commanded motor speed for motor slew rate control, to aid tuning the system for a desired steering feel associated with switching in and out of standby.

To derive the compensation value TVCOMP provided to summing block 122, the power steering fluid temperature input $T_F$ is provided to a look-up table 132. Output $C_p$ of the look-up table is a temperature compensation factor which is multiplied by signal Standby Speed in a multiplier 134, with the product comprising the compensation value TVCOMP subtracted from $I_{MH}$ in block 122, as described above. This compensation of the input current provides a supplement to the loss estimating self-calibration of this invention, to be described with reference to FIG. 10-12 below. An alternate embodiment may use actual measured motor speed rather than the derived value Standby Speed for this compensation, but also introduces time delay due to the low pass filtering used in the derivation of the actual motor speed signal from a sensed motor rotational position. The use of commanded speed as described herein is preferred due to its faster response.

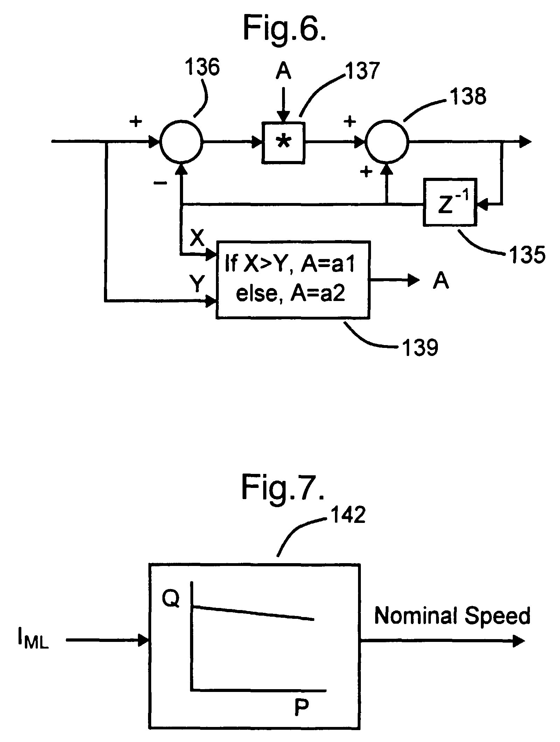

Non-linear low pass filters 124 and 130 may each be described with reference to FIG. 6. The output signal is delayed one period in a delay block 135 and subtracted from the input in a summing block 136. The output of summing block 136 is multiplied by a selectable factor A in multiplier 137 and added to the output of delay block 135 in a summing block 138 to provide the filter output. The output of delay block 135 is compared with the input value to the filter in a comparator 139, with the value of A being chosen as either of calibratable values a1 or a2, depending on which of the compared values is greater, that is, whether the input to the filter is increasing or decreasing. Thus, the output provides a first order low pass filter with different time constants for increasing and decreasing input. Values of a1 and a2 will be derived for a specific vehicle and performance criteria for each of filters 124 and 130.

NOMINAL SPEED COMMAND 140 is described with reference to FIG. 7. It determines the desired motor speed through the center range of pressure (motor current). Input $I_{ML}$ is provided to a function generator 142, in which output Q is derived as a slightly decreasing linear function of input P, with the output Q comprising output signal Nominal Speed. This portion of SPEED COMMAND 100 provides a commanded speed across the great range of motor currents (power steering loads) between a low value just above the standby switch points and the high values where limiting begins. Since motor speed is subject to closed loop control, the need for accuracy is not as great as is required for the switching to and from standby; and the low gain motor current signal $I_{ML}$ is an appropriate input for the large range of current involved.

INPUT CURRENT LIMIT 200 is described with reference to FIG. 9. This function is present to prevent the power steering system from taking too much of the capacity of the electric power supply and thus limits input or battery current as a function of temperature $T_F$

It should be noted that it is input or battery current $I_B$, and not motor current, which is the input to this limiter. Since the motor is controlled in a switching mode, the battery current and motor current are not identical. The input temperature signal $T_F$ is provided to a lookup table 210, which outputs a maximum current value $I_{MAX}$ as a decreasing function thereof. Signal $I_{MAX}$ is provided as a positive input to a summing block 220, to which input signal $I_B$ is provided as a negative input. The output of summing block 220 is scaled by a factor R in amplifier 230 and the scaled value is provided to a summing block 240. The input signal Duty is provided through a delay block 250 to the other input of summing block 240, the output of which is limited between 0 and 100 percent in a limiter 260 and provided as output signal Max Duty, indicative of a maximum average voltage corresponding to a maximum allowed motor current.

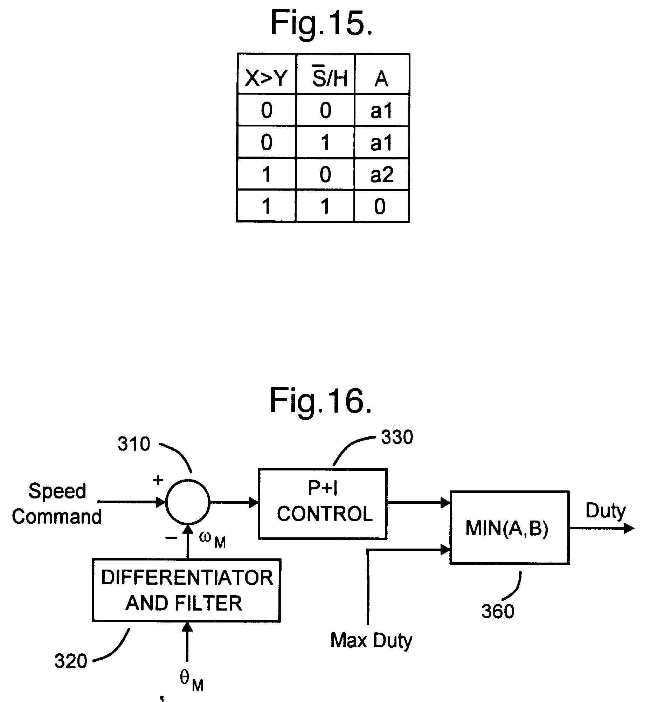

SPEED CONTROL 300 is described with reference to FIG. 16. Signal Speed Command from SPEED COMMAND 100 is provided as a positive input to summing block 310. Input signal $\theta_M$ is provided to a DIFFERENTIATOR AND FILTER 320, the output of which is a signal $\omega_M$ representing actual motor speed, which is provided as a negative input to summing block 310. Such circuits and computer algorithms for differentiating and low pass filtering a signal to obtain its rate of change are well known. The output of summing block 310 is therefore a speed error signal, which is provided to a functional block P+I CONTROL 330. The output of P+I CONTROL 330 is provided, along with signal Max Duty from INPUT CURRENT LIMIT 200, to a functional block MIN(A,B) 360, which chooses the minimum and outputs it as signal Duty. If required, the integrator path in P+I CONTROL 330 may be provided with anti-windup limiting in response to $I_{ML}$ and/or MAX DUTY to prevent delay in recovering from integrator saturation.

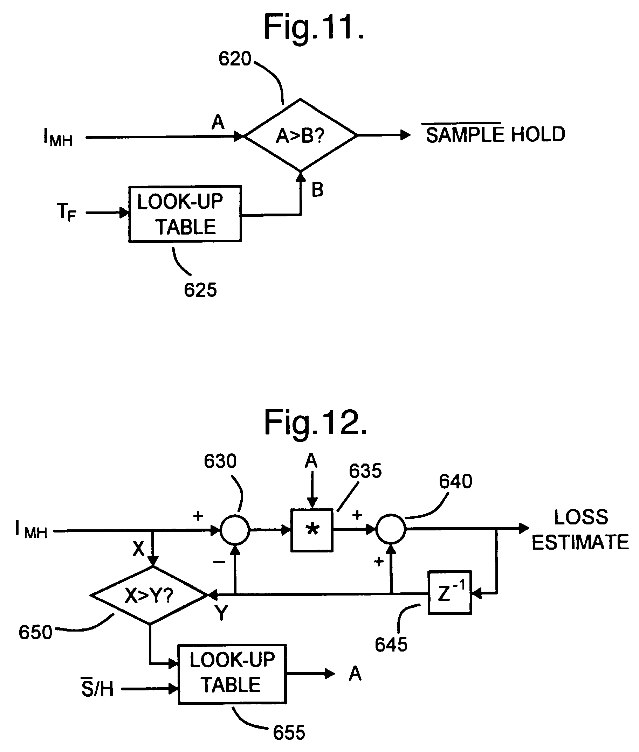

FIG. 10 shows further detail of functional block SELF-CALIBRATION of FIG. 5. This block preferably takes the form of an additional subroutine which is part of the digital computer program performed by EHPS control 50 and which conditions the input motor current signal $I_{MH}$ as part of the derivation of Standby Speed. A LOSS ESTIMATOR 600 receives high gain input motor current $I_{MH}$ and dynamically determines the portion of this current which is used to overcome the friction and other losses within the system. This loss estimate is subtracted from input current $I_{MH}$ in a summing block 610, and the difference is limited to positive values in limiter 615 and output as COMP $I_{MH}$. ENABLE LOGIC 640 is responsive to $I_{MH}$ and power steering fluid temperature signal $T_F$ since the latter reasonably accurately indicates the temperature of the control apparatus, to hold the output of LOSS ESTIMATOR 600 constant under certain conditions, to be described below with reference to FIG. 11.

FIG. 12 shows a functional block diagram of LOSS ESTIMATOR 600. Input motor current signal $I_{MH}$ is provided as a positive input to a summing block 630, the output of which is multiplied by a variable scaling factor A in a variable scaling block 635. The output of variable scaling block 635 is provided as a positive input to another summing block 640, the output of which is provided to the input of a delay block 645 and is also provided as output signal LOSS ESTIMATE. The output of delay block 645 is provided as another positive input to summing block 640 and also as a negative input to summing block 630 in a first order low pass filter configuration with a time constant under the control of variable scaling factor A. The output of delay block 645 is also compared with the input motor current signal $I_{MH}$ in a comparator 650; and the output of comparator 650 is used as one of two inputs to a look-up table 614, the other being a binary output signal $\overline{SAMPLE}$/HOLD ($\overline{S}$/H) of ENABLE LOGIC 605. The output of look-up table 655 is the variable scaling factor A which controls scaling block 635 and thus the time constant of the filter.

FIG. 11 shows a functional block diagram of ENABLE LOGIC 605. Temperature signal $T_F$ is provided to a look-up table 625 which provides an output B as an inverse function of input $T_F$ Motor current signal $I_{MH}$ is provided as an input A to a comparator 620, which outputs the binary output signal $\overline{SAMPLE}$/HOLD. This output signal is high when the input motor current signal is greater than the temperature dependent reference value B and low when it is not.

The operation of SELF-CALIBRATION block 121 will be described with reference to FIG. 10-12 and 15, the latter showing the contents of look-up table 655. When the output (X>Y) of comparator 650 is low, the filter output LOSS ESTIMATE will decrease if the filter is enabled with a finite time constant. Regardless of the output ($\overline{S}$/H) of comparator 620, the filter is enabled with a short time constant, provided by using predetermined value a1 as scaling factor A in scaling block 635. This time constant is sufficiently short that the filter output can track a decrease in the value of $I_{MH}$ so as to record the minimum value attained, although it is still long enough to suppress noise. A typical value produces a time constant of, e.g., 60 ms. The recorded minimum value attained generally occurs when the power assist is minimal (near zero driver input) and the value is thus a good approximation of the internal system losses.

When the output (X>Y) of comparator 650 is high, the filter output LOSS ESTIMATE will increase if the filter is enabled with a finite time constant. If the output ($\overline{S}$/H) of comparator 620 is low, the filter is enabled with a long time constant, provided by using predetermined value a2 as scaling factor A in scaling block 635. This time constant is much longer: at least the length of an extended steering maneuver. A typical value produces a time constant of, e.g., 250 seconds. However, the value is finite; it is not a pure sample and hold function. It allows an increase in the filter output while the filter output is increasing, since there are situations where this is necessary. The rate of increase, however, is very slow. Thus, in ordinary steering maneuvers, which last for durations much less than time constant a2, the filter output, which has tracked the decreasing filter input down to its lowest value and thus represents internal system losses, is held nearly constant and subtracted from $I_{MH}$ to produce the compensated current value COMP $I_{MH}$.

An optional but preferred exception to the finite value of the long time constant a2 is provided when very high power steering load is detected by ENABLE LOGIC 605. If the value of power steering load exceeds a predetermined reference level, stored as a function of temperature, it is assumed that it indicates a steering maneuver. Thus it is not useful for loss estimation; and the time constant for values of $I_{MH}$ greater than the filter output is increased to infinity to prevent the filter output LOSS ESTIMATE from creeping up over time. Thus, when the output (X>Y) of comparator 650 and the output ($\overline{S}$ /H) of comparator 620 are both high, the value zero is used as scaling factor A in scaling block 635. This allows no upward change in the filter output LOSS ESTIMATE until the value of $I_{MH}$ decreases below the reference.

## Claims

1. A vehicle power steering system (5) in which an electric motor (12) drives a pump (14) at a variable speed to provide power steering fluid at a variable flow to meet power steering operation demands, the system having a motor speed control (24) responsive to a command speed signal, and means for generating the command speed signal comprising, in combination:

   means (100) for deriving the command speed signal from an input load signal, the command speed signal being switched in a switching region of the input load signal between a low standby value and a high nominal value, the switching region being calibrated to provide the low standby value of motor speed for power saving in response to low values of the input load signal indicating minimal required power assist and to provide the high nominal value of motor speed in response to higher values of the input load signal indicating high required power assist;
   sensor means (44,47) for providing a power steering load signal;
   filter means (121) operating on the power steering load signal for providing an estimated system loss signal;
   means (122) for compensating the power steering load signal in response to the estimated system loss signal and providing the compensated power steering load signal as the input load signal to the means for deriving the command speed signal, whereby the motor speed is accurately switched between the low standby value and the high nominal value in the switching region in spite of varying system losses.

2. The vehicle power steering system of claim 1 in which the power steering load signal is generated by the sensor means in response to sensed current in the electric motor.

3. The vehicle power steering system of claim 1 in which the filter means comprises a low pass filter (600) having a first finite time constant for increasing input and a second finite time constant, shorter than the first finite time constant, for decreasing input.

4. The vehicle power steering system of claim 3 in which the first finite time constant is as long as an extended steering maneuver and the second finite time constant is sufficiently short to track the decreasing value of the power steering load signal but long enough to suppress noise therein.

5. The vehicle power steering system of claim 3 in which the first finite time constant is substantially greater than 1 second and the second finite time constant is substantially less than one second.

6. The vehicle power steering system of claim 3 in which the second finite time constant is less than one second and the first finite time constant is at least 100 times as long as the second finite time constant.

7. The vehicle power steering system of claim 3 in which the filter means further comprises override means (655) for preventing the output of the filter means from rising when the power steering load signal exceeds a reference value.

8. The vehicle power steering system of claim 7 further comprising means (48) for sensing the temperature of the power steering fluid and means (625) for deriving the reference value as a predetermined function thereof.

9. The vehicle power steering system of claim 1 in which the compensated power steering load signal is derived from the difference (610) between the power steering load signal and the estimated system loss signal.

10. The vehicle power steering system of claim 9 in which the filter means is a low pass filter having a first finite time constant for increasing input and a second finite time constant, shorter than the first finite time constant, for decreasing input.

11. The vehicle power steering system of claim 10 in which the first finite time constant is as long as an extended steering maneuver and the second finite time constant is sufficiently short to track the decreasing value of the power steering load signal but long enough to suppress noise therein.

12. The vehicle power steering system of claim 1 in which the means for compensating the power steering load signal is further responsive (132,134) in the switching region to the power steering fluid temperature sensor (48) to compensate in a predetermined manner for losses varying with temperature.

13. The vehicle power steering system of claim 1 in which the means for compensating the power steering load signal is further responsive (134) in the switching region to a motor speed signal to compensate in a predetermined manner for losses varying with motor speed and provides one of the sensed motor speed and the command speed signal as the motor speed signal.

14. The vehicle power steering system of claim 1 in which the means for compensating the power steering load signal is further responsive (132,134) in the switching region to the power steering fluid temperature sensor and a motor speed signal to compensate in a predetermined manner for losses varying with temperature and motor speed and provides one of the sensed motor speed and the command speed signal as the motor speed signal.

# Fig.1.

# Fig.2.

# Fig.3.

# Fig.4.

# Fig.5.

EP 0 913 315 A2

# Fig.6.

# Fig.7.

## Fig.8.

## Fig.9.

# Fig.10.

# Fig.11.

# Fig.12.

# Fig.13.

```
        ┌──────────────┐
        │  INITIALIZE  │
        └──────────────┘
               │
               ▼
      ┌─────────────────┐         400
      │   INITIALIZE    │
      │  COUNTERS, ETC  │
      └─────────────────┘
               │
    402        ▼
      ┌──────────────────────────────┐
      │ READ $I_B$, $I_{MH}$, $I_{ML}$, $T_F$, $\theta_M$ │
      └──────────────────────────────┘
               │
               ▼                      404
      ┌─────────────────┐
      │  SPEED COMMAND  │
      └─────────────────┘
               │
    406        ▼
      ┌──────────────────────┐
      │ INPUT CURRENT LIMIT  │
      └──────────────────────┘
               │
               ▼                      408
      ┌─────────────────┐
      │  SPEED CONTROL  │
      └─────────────────┘
               │
               ▼
            RETURN
```

# Fig.14.

```
           ┌─────────┐
           │  MAIN   │
           └────┬────┘
                │          ╱ 500
        ┌───────▼────────┐
        │  READ I_B, θ_M │
        └───────┬────────┘
   502          │
      ╲ ┌───────▼────────────────┐
        │  INPUT CURRENT LIMIT   │
        └───────┬────────────────┘
                │
        ┌───────▼────────┐
        │ SPEED CONTROL  │  ╱ 504
        └───────┬────────┘
   506          │
      ╲  ┌──────▼────────┐
  ┌──────┤ COUNT1 = 4?   ├──────────┐
  │      └───────────────┘          │
508 ╲    │                          │
 ┌──▼──────────────┐          ┌──────▼─────────┐
 │  RESET COUNT1   │  510 ╱   │  INC COUNT1    │
 └──┬──────────────┘          └──────┬─────────┘
    │                                │
    └──────────┐                     │
         ┌─────▼──────────┐    ┌─────▼─────┐
   512 ╱ │ READ I_MH, I_ML│    │  RETURN   │
         └─────┬──────────┘    └───────────┘
               │
         ┌─────▼──────────┐
         │ SPEED COMMAND  │
         └─────┬──────────┘  ╱ 514
               │
         ┌─────▼─────┐
         │  RETURN   │
         └───────────┘
```

# Fig.15.

| X>Y | $\overline{S}$/H | A |
|---|---|---|
| 0 | 0 | a1 |
| 0 | 1 | a1 |
| 1 | 0 | a2 |
| 1 | 1 | 0 |

# Fig.16.